# EUROPEAN PATENT SPECIFICATION

(11) **EP 2 709 906 B1**
(45) Date of publication and mention of the grant of the patent: **01.03.2017**
(21) Application number: 12721494.8
(22) Date of filing: 10.05.2012
(51) Int. Cl.: B64D 11/02, C02F 1/68, H01M 8/06, C02F 1/66

(54) **ARRANGEMENT FOR GENERATION AND TREATMENT OF WATER, METHOD FOR GENERATION AND TREATMENT OF WATER AND AIRCRAFT WITH SUCH AN ARRANGEMENT**
ANORDNUNG ZUR ERZEUGUNG UND BEHANDLUNG VON WASSER, VERFAHREN ZUR ERZEUGUNG UND BEHANDLUNG VON WASSER UND FLUGZEUG MIT EINER SOLCHEN ANORDNUNG
DISPOSITIF POUR LA GÉNÉRATION ET LE TRAITEMENT DE L'EAU, PROCÉDÉ DE GÉNÉRATION ET DE TRAITEMENT DE L'EAU ET AÉRONEF PRÉSENTANT UN TEL DISPOSITIF

(30) Priority: 20.05.2011 DE 102011102177; 20.05.2011 US 201161488632 P
(43) Date of publication of application: 26.03.2014
(73) Proprietor: Airbus Operations GmbH, 21129 Hamburg (DE)
(72) Inventor: OTTO, Thorsten, 21073 Hamburg (DE); WOBST, Elisabeth, 21129 Hamburg (DE); BARYLO, Boris, 22523 Hamburg (DE)
(74) Representative: Kopf Westenberger Wachenhausen Patentanwälte PartG mbB
(86) International application number: PCT/EP2012/058635
(87) International publication number: WO 2012/159890

(56) References cited:
- EP-A2- 2 213 571
- WO-A2-2004/040680
- DE-A1- 10 216 709
- DE-A1-102007 046 381
- US-A1- 2009 283 464

## Description

### TECHNICAL FIELD

The invention relates to an arrangement for generating and treating water, to a method for generating and treating water, and to an aircraft comprising such an arrangement in an aircraft.

### BACKGROUND TO THE INVENTION

Arrangements for generating water on board means of transport are known; they are based on generating water by means of exhaust gas of a fuel cell system. Moist exhaust gas of a fuel cell is cooled in a condenser and is subsequently separated from the exhaust gas by means of a water separator.

Furthermore, it is known to treat water that has been obtained in such a process, because of the very small content of ions, by salination in order to increase the salinity or the tonicity so that it is suitable for human consumption. This is, for example, disclosed in DE 10 142 215 A1 and in DE 10216 709 A1.

### PRESENTATION OF THE INVENTION

The water condensed from a fuel cell exhaust gas comprises a very low ion content and practically no buffering capacity, and consequently the pH-value of the condensate resulting from a solution, in particular from CO₂ from the ambient air, is in an acid range of approximately 5.5 or less, which is below the lower limit of the German Drinking Water Ordinance. While it is possible to increase the salinity of the condensate by means of salination of the condensate with a neutral salt, this would not have any influence on the excessively low pH-value and on the buffering capacity.

It is thus the object of the invention to propose an arrangement and a method for generating and treating water, in which arrangement and method a drinking water quality is achieved that provides adequate salinity, a buffering capacity and a pH-value that is within the value range specified by commonly-used drinking water regulations.

The object is met by an arrangement for generating and treating water with the characteristics of the independent claim 1. Advantageous improvements are stated in the subordinate claims. An arrangement according to the invention for generating and treating water comprises a fuel cell with a water-generating system, a salination unit for the salination of water with a variable salt concentration, a basic salt, a state measuring device for acquiring an operating state of the salination unit, a water-receiving reservoir for receiving water, a water-quality measuring device for measuring the water quality of the water whose salt content has been increased, and a control unit. The salination unit is designed to add an basic salt with an alkaline effect to water. The water-receiving reservoir is arranged downstream of the salination unit for receiving water whose salt content has been increased, and is connected to the water-quality measuring device. The water-quality measuring device is arranged downstream of the salination unit. The control unit is connected to the water-quality measuring device and to the state measuring device and is designed, for setting a predetermined water quality in the water-comprising reservoir, to control the salination unit depending on the operating state of the salination unit and on the measured water quality.

As mentioned above, a fuel cell is in a position, by means of oxidation of hydrogen, to generate an exhaust gas comprising water vapor, from which exhaust gas water can be condensed and removed. The condensate obtained in the water-generating system comprises a pH-value of 5.5 or less. The salination unit as a core of the invention is designed with an basic salt or salt mixture that is suitable to increase the pH-value of the condensate. Admixing basic salt to the condensate thus at the same time increases the salinity, the buffering capacity and the pH-value of the water obtained. In this context the term "buffering capacity" relates to the ability of a solution to change the pH-value to a significantly lesser extent when acid or a chemical base is added than would be the case in a non-buffered system. Preferably, the salt or the salt mixture is balanced in such a manner that at the same time an optimal increase in the salinity and an optimal adjustment of the pH-value can take place. Sodium hydrogen carbonate is one example of such a salt.

Among other things a geometrically determinable residual size of a salt body through which or against which a liquid can flow, the presently existing salt reserve in the salination unit or the available quantity of a saline solution could be considered to be an operating state of the salination unit. In this arrangement the operating state is generally to represent a characteristic variable relating to the operating characteristics of the salination unit, which variable characterizes the salination behavior of the salination unit. In addition, it is an elementary requirement for the control unit to know which physical parameters are to be changed as controlled variables when regulating or controlling the salination unit in order to achieve the desired salination of a condensate fed to the salination unit. These parameters could, for example, comprise the volume flow of water that flows through the salination unit. In order to control the salination unit taking into account this parameter for example, conveying equipment with an adjustable volume flow could be used, as could a valve that regulates the volume flow, or other means with which a predetermined volume flow through the salination unit results.

With the use of the control unit, which is connected both to the water-quality measuring device and to the state measuring device, a desired drinking water quality in the water-receiving reservoir can be automatically set. The present invention thus describes an arrangement for generating and treating water, by means of which arrangement salt can be added to the de-ionized water obtained from a fuel cell so that the limits relating to the pH-value and the conductivity according to the drinking water ordinance are automatically complied with, taking into account a variable water production of the fuel cell, and a changeable salt delivery of a salination unit. Ideally, salt is added only to such an extent that the degree of hardness of the water is low. This minimizes calcification of the devices and pipes.

In an advantageous embodiment the salination unit comprises conveying equipment that is arranged downstream of the fuel cell, which conveying equipment is designed to lead water from the fuel cell or its water generating system to the salination unit. Generally-speaking the conveying equipment is designed to pressurize condensate from the water generating system to a certain extent so that transport of the condensate to a salination device that dispenses salt ions is carried out. In this arrangement the conveying equipment can be implemented in various ways. Apart from impeller pumps or piston pumps it is also possible to provide intermittent operation of a valve for feeding compressed air to an intermediate reservoir of the water-generating system for the compressed-air driven conveyance of condensate. As explained above, it would be preferable for the volume flow caused by the conveying equipment to be adjustable.

In an advantageous embodiment of the invention the water-quality measuring device is a device for measuring the conductivity of water. The condensate obtained from the fuel cell exhaust gas comprises very few ions, and thus very low salinity and low conductivity. Apart from increasing salinity, salination also has a favorable effect on the pH-value so that the conductivity of the water can be used as a measured variable both relating to salinity and to the pH-value. By measuring the conductivity of the water whose salt content has been increased, due to the use of an basic salt or a salt mixture and a, for example experimentally determined, usual pH-value of the condensate from the water generating device, from the conductivity of the water it is possible to directly deduce the set pH-value of the water whose salt content has been increased. This obviates the need for complex pH-value measuring, which for example with the use of the arrangement according to the invention in a means of transport, because of the temperatures, vibrations and movement forces occurring therein, would hardly be feasible with the use of conventional methods.

In a preferred embodiment of the invention the salination unit comprises at least one salt body enclosed by a housing, wherein the housing comprises an inlet and an outlet so that, due to the flow around or flow through, salt ions are dispensed to water flowing in through the inlet and flowing out through the outlet. Such a salination unit carries out a continuous salination process in which salt ions can be continuously dispensed to water that flows through. The housing can be designed in whatever manner as long as it is ensured that the water makes intensive contact with the salt body contained therein, and that no additional undesirable substances are introduced to the water as a result of the housing material. Such a salination unit is associated with an advantage in that to the greatest possible extent it achieves maintenance-free operation, apart from exchange after consumption, as a result of the use of exclusively passive components.

In an advantageous embodiment of the invention the salination unit comprises several separate salination devices, spaced apart from each other, which can individually be subjected to condensate whose salt content is to be increased. This makes it possible to implement improved reliability of operation of a salination unit, because in the case of failure of one of several salination devices it need not be assumed that the performance of all the salination devices of an individual salination unit is impeded. Furthermore, with this embodiment the various salts can be accommodated in separate salination devices, and thus undesirable interactions between the individual materials during production, storage and usage are avoided.

In an advantageous embodiment the separate salination devices are interconnected by a parallel connection. Individual valves make it possible to individually control the volume flow through the respective salination device, so that during a malfunction, consumption of the available salt or the like, any affected salination device is closed off from the inflow of the condensate, and another salination device for salination of the condensate is opened. With the use of salt bodies in housings, by successive consumption of several salt bodies in separate salination devices, parallel connection makes it possible to extend the maintenance interval relating to the exchanging or re-filling of unspent salt bodies. In order to prevent any undesirable reactions among various salts, the individual salination devices can also comprise different salts that flow in at different volume flows, which can be controlled by the valves. In an equally advantageous embodiment the separate salination devices are interconnected in the form of a series connection. This provides a particular advantage in that with a relatively small volume flow of a condensate whose salt content is to be increased, comparatively fast or intensive salination is made possible.

It is understood that it is also possible for several salination units comprising separate salination devices to be individually interconnected in a series connection or parallel connection. Consequently, the individual advantages of the different linking forms can be combined. Parallel connection of several salination units that comprise salination devices that are interconnected in series appears to be particularly advantageous.

In an advantageous embodiment of the invention the arrangement comprises at least one intermediate reservoir arranged upstream of the salination unit. A continuous volume flow is advantageous to ensure effective control of the salt concentration and dissolution, which is as uniform as possible, of a salt body with a flow around it or through it. Since water production from the fuel cell cannot be influenced, the intermediate reservoir is provided as a buffer. In a further preferred manner a fill level sensor is provided that measures the fill level of the intermediate reservoir and transmits it to the control unit. When a maximum value relating to the fill level of the intermediate reservoir is achieved, the water is conveyed through the salination unit by means of a valve that opens. If the value drops to below a minimum value, the flow into the salination unit is interrupted again by the closure of this valve. This results in intermittent operation.

In an advantageous embodiment of the invention the salination unit comprises a storage tank and a metering device, wherein the metering device is designed to dispense a metered quantity of a saline substance from the storage tank to a reservoir containing water. This type of salination is referred to as discontinuous salination in which a discrete quantity of a saline substance is dispensed to a reservoir containing water in order to increase the salt concentration. The saline substance can comprise various characteristics and can be present in a solid, a powdery or a crystalline form, and as an alternative also in liquid form as a solution.

In an advantageous improvement of the invention the above-mentioned water-comprising reservoir is designed as a supply reservoir that is used to supply water to a water system, thus serving as a or the primary reservoir. Accordingly, in this particular case the salination unit is designed to fill a discrete quantity of a saline substance directly into a fresh water tank of the fresh water system, for example of an aircraft, and to provide a quality of water that is suitable for human consumption.

In an advantageous embodiment of the invention the water-comprising reservoir is an intermediate reservoir that is preferably arranged upstream of a supply reservoir and that can be connected to said supply reservoir. The intermediate reservoir can thus, if required, be connected to the supply reservoir in order to dispense to the supply reservoir a quantity of condensate whose salt content has been fully increased. The supply reservoir is thus exclusively filled with water whose salt content has been fully increased. In this arrangement the intermediate reservoir forms a buffer reservoir that is continuously filled by condensate from the fuel cell so that, if a particular fill level is detected, the salination unit carries out discontinuous salination, after which the water whose salt content has been increased is fed from the intermediate reservoir to the supply reservoir.

In an advantageous embodiment the control unit is connected by means of a valve between the intermediate reservoir and the supply reservoir and is designed to determine when the salt content of the water contained in the intermediate reservoir is fully increased after the addition of the metered quantity of a saline substance. By taking into account an average dissolution time with the use of a solid saline substance it can be ensured that during removal of the water, whose salt content has been increased, from the intermediate reservoir no salt residue remains in the intermediate reservoir and that the supply reservoir always comprises the prescribed salt concentration.

In an advantageous embodiment the storage tank comprises a saline solution that is preferably highly concentrated and largely saturated so that, by means of adding this saline solution, salination can be provided relatively quickly without observing a dissolution time or the like. In an equally advantageous embodiment of the invention the storage tank contains water-soluble tablets comprising a saline substance, wherein by means of the metering device, for example, a predetermined number of salt tablets are placed in the reservoir. In this arrangement the metering device can be a rotary slide, or, in the case of stacked tablets being used, the lowermost tablet can be added to the water at any given time with the use of a slide gate.

In an equally advantageous embodiment of the invention the water-comprising reservoir, which can be the supply reservoir or the intermediate reservoir, comprises a fill level sensor that can be connected to the control unit, wherein the control unit is designed, depending on the water quality and the fill quantity in the reservoir, to determine a quantity of the saline substance that is to be placed in the reservoir in order to achieve a predetermined quality of drinking water, and to control the metering device so that it delivers the determined quantity. In this manner, depending on the existing salt concentration in the reservoir, a necessary quantity of salt can automatically be determined, which quantity is necessary to achieve the required salt content and the required pH-value, in order to take this into account in a subsequent continuous or discontinuous method. In this arrangement a largely constant quality of drinking water in the reservoir can be achieved without this necessitating manual intervention.

The object relating to the method is met by a method with the characteristics of the further independent claim. The method according to the invention essentially comprises the characteristics of generating water by means of a fuel cell process and subsequent condensation, by means of measuring a water quality of water, by means of salination by adding an basic salt to the water, and by means of acquiring an operating state of the salination unit.

In order to set a desired quality of drinking water, a control unit controls the salination unit depending on the determined water quality and on the determined operating state.

As described above, in an advantageous embodiment salination can comprise a flow through a salination unit with a salt body enclosed by a housing; alternatively or in addition to this also the delivery of a saline substance by means of a metering device.

In an advantageous embodiment several separate salination units are used, wherein depending on the operating state of the individual salination devices, the control unit opens or closes individual stop valves to the salination devices.

The arrangement according to the invention and the method according to the invention are particularly suitable for generating and treating water on board an aircraft in which with the use of a fuel cell the weight of water to be carried along can be saved. Nonetheless, the arrangement according to the invention and the method according to the invention ensure that automatically setting a quality of drinking water can be achieved, even in the case of variable production of water by the fuel cell.

### BRIEF DESCRIPTION OF THE DRAWINGS

Further characteristics, advantages and application options of the present invention are disclosed in the following description of the exemplary embodiments and of the figures. All the described and/or illustrated characteristics per se and in any combination form the subject of the invention, even irrespective of their composition in the individual claims or their interrelationships. Furthermore, identical or similar components in the figures have the same reference characters.
Fig. 1 shows a diagrammatic block-based view of a first exemplary embodiment of the arrangement according to the invention.
Fig. 2 shows a second exemplary embodiment with two salination units in a parallel connection.
Fig. 3 shows a further exemplary embodiment with two salination units in a series connection.
Fig. 4 shows a further exemplary embodiment with a recirculation line.
Fig. 5 shows a further exemplary embodiment with a recirculation line and two salination units in a parallel connection.
Fig. 6 shows a further exemplary embodiment with a recirculation line and two salination units in a series connection.
Fig. 7 shows the pH-value curve when implementing a method according to the invention.
Fig. 8 shows an exemplary embodiment with a salination unit comprising a metering unit.
Fig. 9 shows a further exemplary embodiment with two salination units comprising a metering unit.
Fig. 10 shows an aircraft, comprising an arrangement according to the invention.

### DETAILED DESCRIPTION OF EXEMPLARY EMBODIMENTS

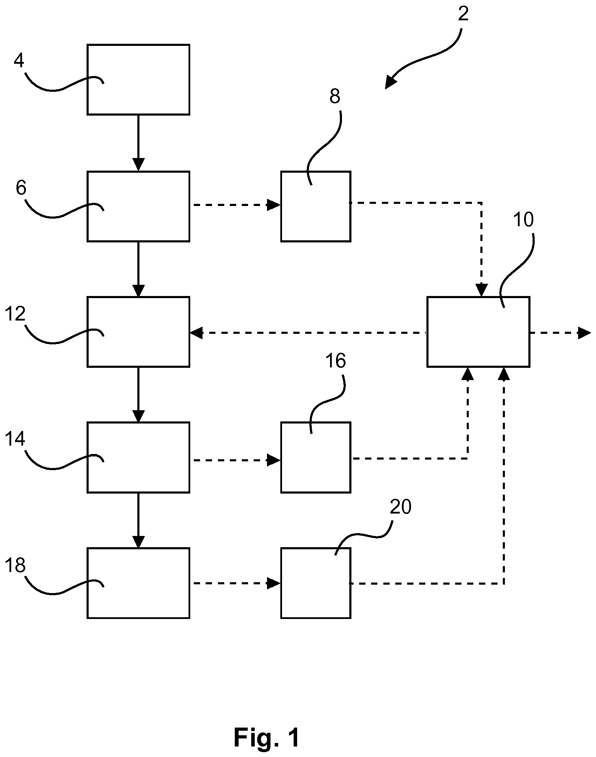

Fig. 1 in a diagrammatic block-based view shows an arrangement 2 according to the invention for generating and treating water. To this effect a fuel cell 4 is provided that comprises a water-generating system (not shown in detail). The water generated therein is, for example, fed in a gravity-driven manner to an intermediate reservoir 6 shown as an example, which intermediate reservoir 6 comprises a fill level sensor 8 that is designed to measure the present fill level of the intermediate reservoir 6. The measured fill level is transmitted in the form of a signal to a control unit 10.

Conveying equipment 12, which is also connected to the control unit 10, conveys water from the intermediate reservoir 6 to a salination unit 14 that is designed to enrich water, which enters or flows through a salination device, with salt ions. An operating state of the salination unit 14 is acquired by way of a state measuring device 16 that transmits a corresponding signal to the control unit 10. The water, whose salt content has been increased, which water flows from the salination unit 14, is fed to a supply reservoir 18 that is connected to a water-quality measuring device 20.

In a particularly preferred manner the water-quality measuring device is designed for determining the conductivity of water. From the interrelation between influencing the salt content and the pH-value of the basic salt or salt mixture used, it is possible from the conductivity of the water in the supply reservoir 18 to deduce the arising pH-value. A corresponding signal is transmitted to the control unit 10. As an alternative to this the water-quality measuring device 20 can determine the pH-value of the water in the supply reservoir 18 directly, a process which when applied in a means of transport could be difficult because of the temperatures, vibrations and motion forces.

In the exemplary embodiment shown, the salination unit 14 could be designed in such a manner that a salt body is arranged in a housing that comprises an inlet and an outlet. Water that flows through the inlet into the housing and that flows out from it again through the outlet flows through or around the salt body, which subsequently dispenses salt ions to the water. In this arrangement the concentration of the salt in the water depends on the volume flow moving through the salination unit 14. The volume flow can thus represent a controlled variable for the control unit 10.

The progress of consumption of the salt body, which is, for example, a cylindrical or barshaped body whose external diameter is reduced during continuous flow around it, is a further physical parameter that contributes to determining the resulting salinity. As a result of the reduction in the diameter, the surface of the salt body that dispenses salt ions thus becomes smaller, and consequently, with a constant volume flow per unit of time, consistently fewer salt ions are dispensed. The state measuring device 16 is designed, depending on the respective design of the salination unit 14, to determine a parameter that characterizes the ability to dispense salt ions. In the case shown, this parameter could be determined in part by the diameter or the size of the outer surface around which water can flow.

To ensure that even under changing operating conditions of the fuel cell 4 a constant salt concentration in the supply reservoir 18 can be maintained, control of the salination process is necessary, which takes place by the control unit 10 with the use of said transmitted variables. By knowing the measured variables of conductivity or pH-value and the operating state of the salination unit 14 the control unit 10 is basically able, depending on the respective ability of the salination unit 14 to dispense salt ions to water flowing through, to control the conveying equipment 12 for influencing the salination unit 14 so that water of a constant drinking water quality is filled into the supply reservoir 18.

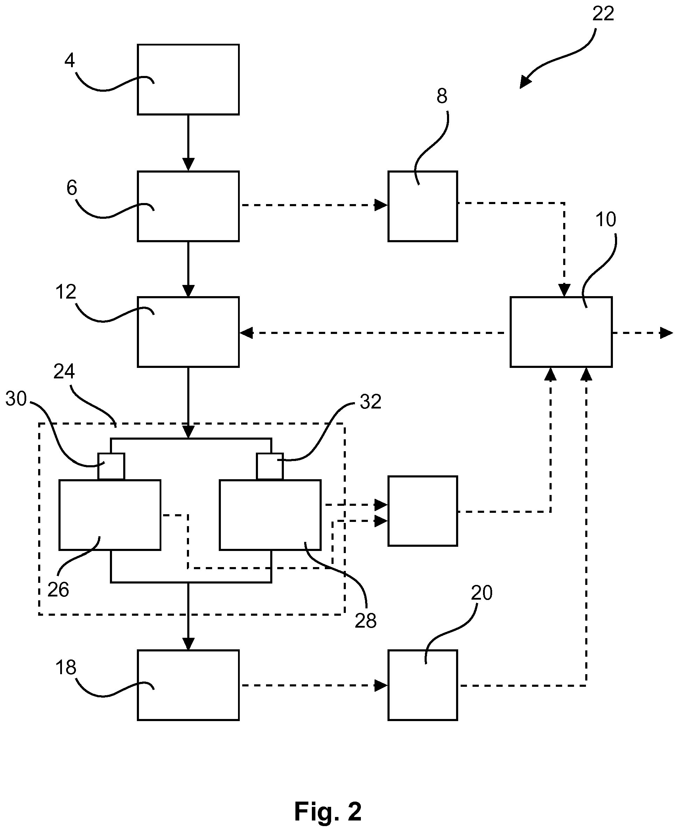

Fig. 2 shows a slight modification in which an arrangement 22 according to the invention comprises a salination unit 24 that comprises two separate salination devices 26 and 28 that form a parallel connection. By arranging valves 30 and 32 whose flow can be influenced, water from the conveying equipment 12 can flow either through the one salination device 26 or through the other salination device 28 or through both salination devices 26 and 28. Accordingly the state measuring device 16 is connected both to the one salination device 26 and to the other salination device 28. Corresponding signals are transmitted to the control unit 10.

In the case of more complex salt compositions, during the production of the salt body or during contact with water in the singular salination unit 14 shown in Fig. 1, undesirable reactions in the salt components can occur, and as a result of this, in the salt body, for example compounds of greatly differing solubility can arise. Under certain circumstances this results in impeding the function of the salination unit 14 so that the desired salt concentration can no longer be attained. In order to prevent this, the arrangement 22 according to the invention can be expanded to the effect that two or more salination devices 26 and 28 are used, which are connected in parallel. Each salination device 26 or 28 then only comprises certain salt components so that undesirable reactions can be prevented.

In order to regulate the volume flow through the salination devices 26 and 28 the valves 30 and 32 are used, which can be controlled by the control unit 10 so that individual mixing proportions of the different salination devices 26 and 28 can be achieved.

As an alternative to this, the two salination devices 26 and 28 can also comprise the same salt bodies, and the valves 32 and 30 are successively opened so that after a salt body of a salination device 26 or 28 has been consumed, the salt body of the next salination device 28 or 26 is consumed. In order to increase the concentration or the salination speed, in this case it is, however, also possible for water to flow through both, or through all, the salination devices 26 and 28 with the valves 30 and 32 fully open. The overall volume flow through the salination unit 24 remains the same, but the individual volume flows 26 and 28 are smaller than the overall volume flow, and consequently the resulting discrete fluid volumes spend more time on salt-ion-dispensing surfaces of a salt body or the like than is achievable with a higher volume flow and thus with higher salt concentration.

With reference to Fig. 2, purely as an example, it is shown that two separate salination devices 26 and 28 are used, but theoretically any number of salination devices connected in parallel can be used.

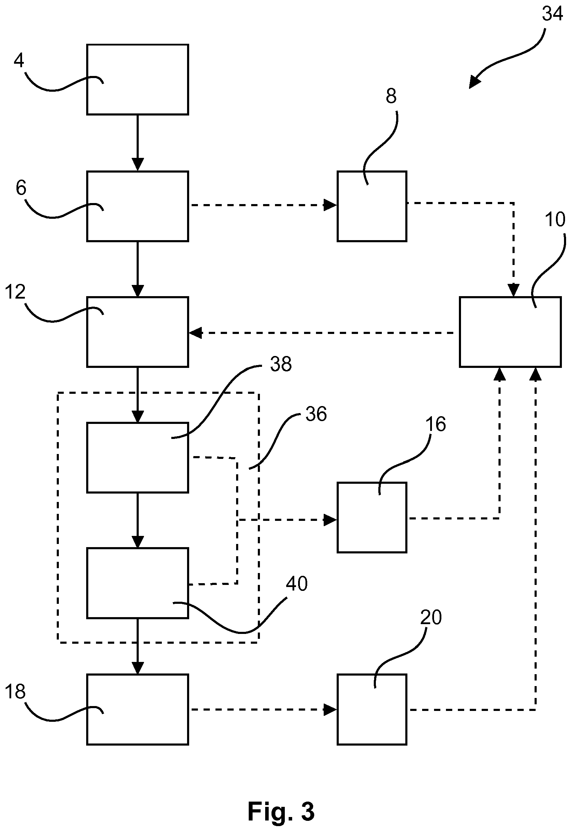

The exemplary embodiment, shown in Fig. 3, of an arrangement 34 according to the invention comprises a salination unit 36 with two separate salination devices 38 and 40 that are interlinked in a series connection. With an unchanging volume flow through both salination devices 38 and 40, through which liquid flows successively, for the most part even dissolution of salt takes place so that overall a relatively high salt concentration can be achieved. The two salination devices 38 and 40 can also comprise different salts or salt mixtures so that, as in the example of Fig. 2, undesirable reactions of the various salts can be ruled out. In this exemplary embodiment, too, both salination devices 38 and 40 are connected to a state measuring device 16 for acquiring an operating state.

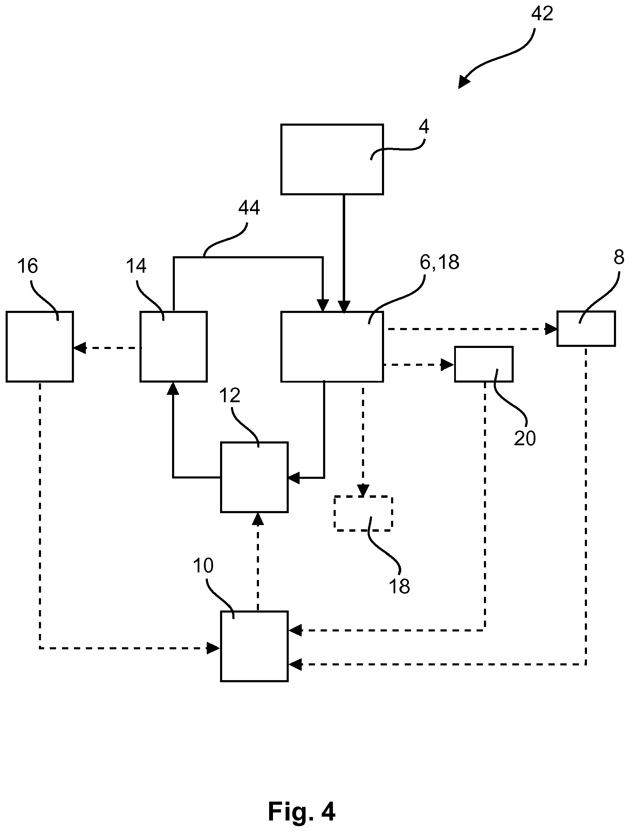

An arrangement 42 according to the invention, which arrangement is shown in Fig. 4, comprises a slightly modified design. In the arrangement according to Fig. 1, in which water flows through the salination unit 14 precisely once, setting the desired salt concentration is only possible by means of regulating the volume flow. Since the extent of this flow cannot be selected at will, the solubility speed of the salt body itself should match the volume flow conditions of the overall system as well as possible. As an alternative, the arrangement 42 shown in Fig. 4 can be used. This exemplary embodiment is characterized in that the conveying equipment 12 feeds water from a reservoir containing water, which reservoir can be an intermediate reservoir 6 or the supply reservoir 18, to a salination unit 14, and by means of a recirculation line 44 the water whose salt content has been increased is fed back to the reservoir. By continuously measuring the water quality by means of the water-quality measuring device 20, the control unit 10 can detect when the salt concentration in the water-comprising reservoir is sufficient. If the reservoir is the intermediate reservoir 6, the latter can then be emptied into the supply reservoir 18, which is indicated by the dashed line. If the reservoir is the supply reservoir 18, the latter can directly supply water to consumers of water.

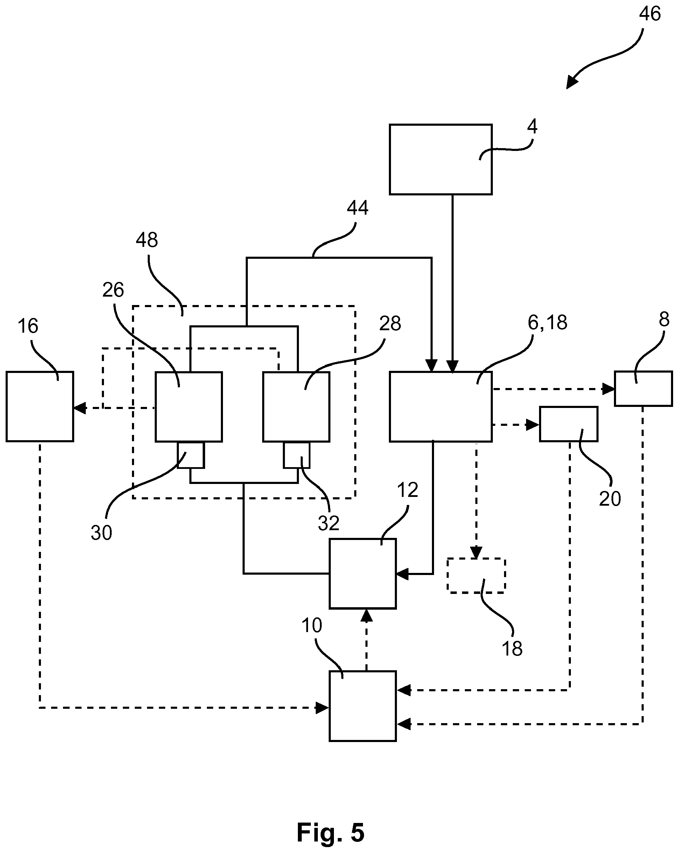

In a further exemplary embodiment of an arrangement 46 according to the invention according to Fig. 5 a salination unit 48 comprises two salination devices 26 and 28, connected in parallel, with valves 30 and 32, similar to the arrangement shown in Fig. 2.

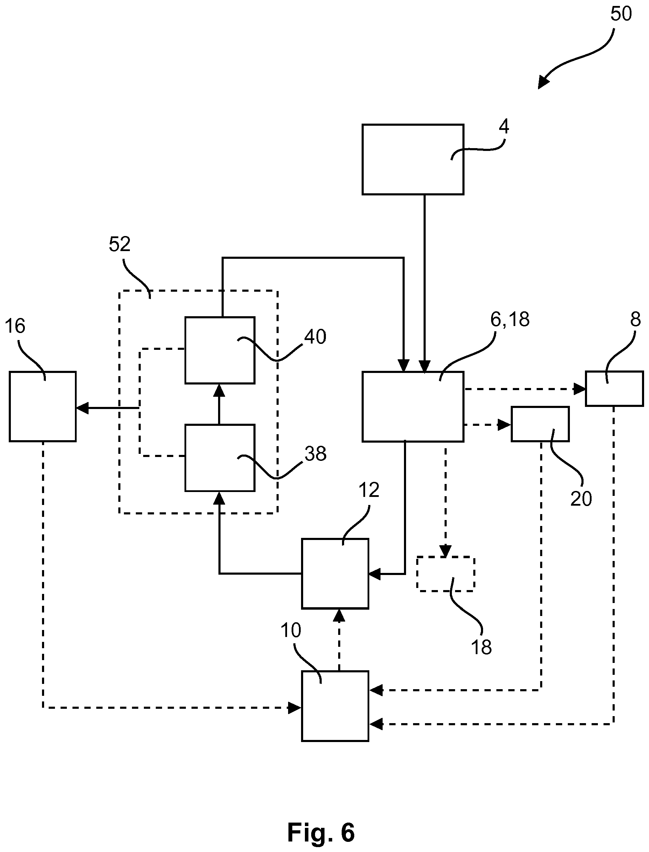

Likewise, Fig. 6 shows a further modification in the form of an arrangement 50 according to the invention, in which modification a salination unit 52 comprises two salination devices 38 and 40 in a series connection.

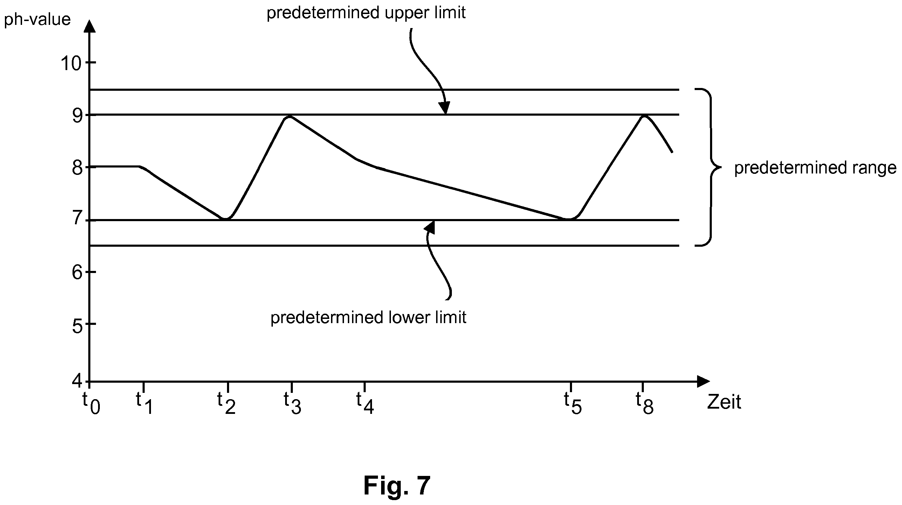

An example of a control principle is shown in Fig. 7. The pH-value curve projected over time is shown. At the point in time to the fuel cell 4 is switched off, and a certain quantity of water is contained in a water-comprising reservoir 6 or 18, which water has a pH-value of, for example, 8. At t₁ the fuel cell 4 is switched on. De-ionized water is conveyed to the intermediate reservoir 6 or supply reservoir 18. Accordingly, as a result of dilution of the salt concentration, the pH-value drops. After dropping below a predetermined lower limit, at t₂ water is conveyed through a salination unit, and consequently the pH-value rises. At t₃ the predetermined upper limit of the pH-value of, for example, 9 has been reached, and conveying is interrupted. Since the fuel cell 4 continues to produce water, the pH-value drops again. At t₄ the operating conditions of the fuel cell 4 change to the effect that less water is produced, and consequently dilution and thus the drop in the pH-value slow down. At t₅ the lower limit in the form of a pH-value of 7 is reached again, after which salination commences anew as described above.

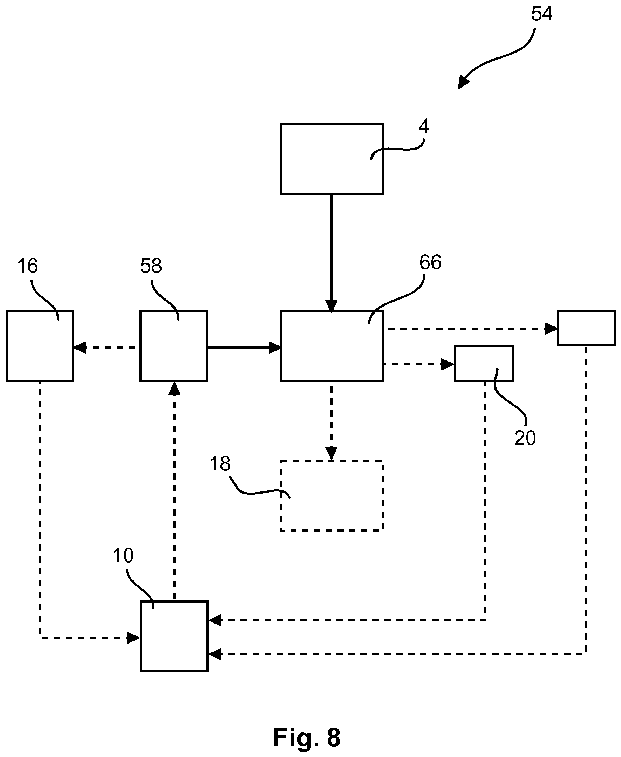

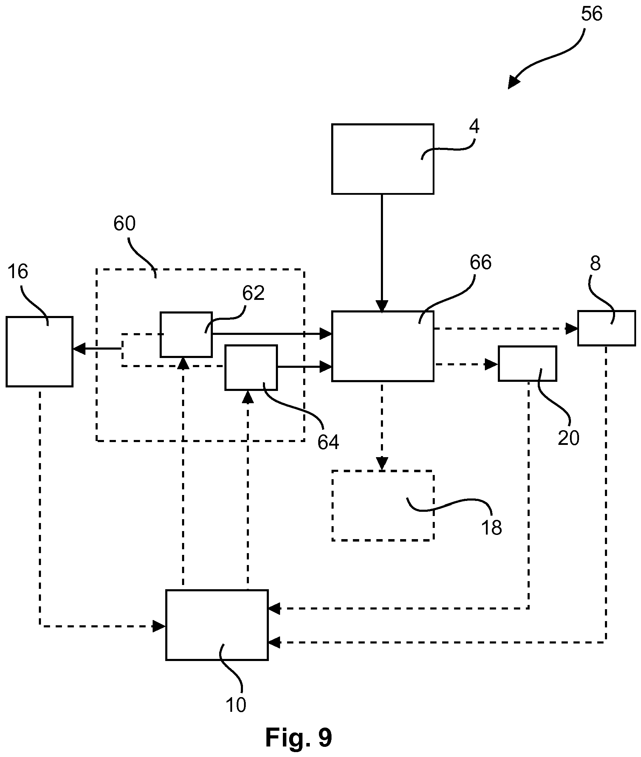

Figs 8 and 9 each show an arrangement, 54 and 56, according to the invention, in which arrangement a discontinuous salination unit 58 or 60 is used. In Fig. 9 the salination unit 60 comprises two separate salination devices 62 and 64 in a parallel connection. The arrangements 54 and 56 are characterized by a metering unit (not shown in further detail) that in a discontinuous manner dispenses a discrete quantity of a saline substance from a storage tank to the water in a water-containing reservoir 66 that is designed either as a supply reservoir or as an intermediate reservoir. If the water-containing reservoir 66 is an intermediate reservoir, the water whose salt content has been increased can finally be delivered to a supply reservoir 18.

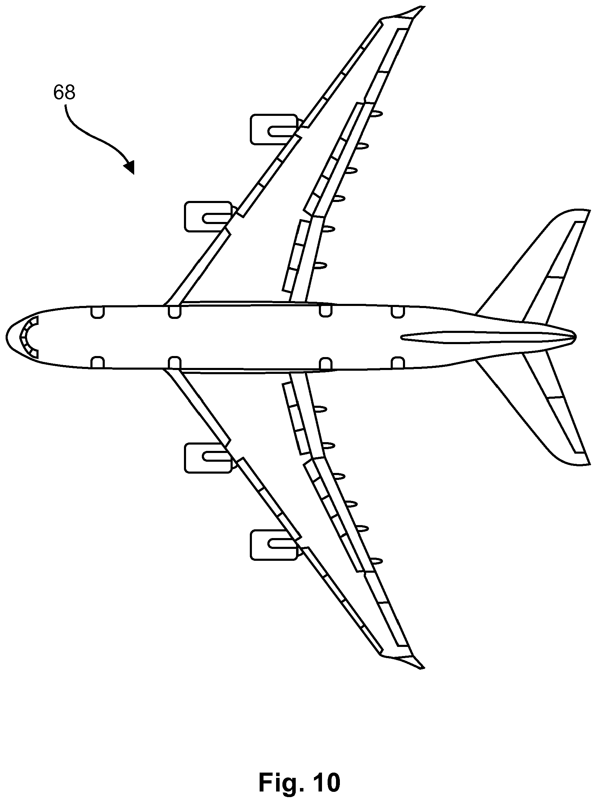

Finally, Fig. 10 shows an aircraft 68 comprising a fuel cell system and providing a drinking water supply with the use of an arrangement according to the present invention.

## Claims

1. An arrangement (2, 22, 34, 42, 46, 50, 54, 56) for generating and treating water, comprising:
- a fuel cell (4) with a water-generating system,
- a salination unit (14, 24, 36, 48, 52, 58, 60) for the salination of water with a variable salt concentration,
- a basic salt,
- a state measuring device (16) for acquiring an operating state of the salination unit (14, 24, 36, 48, 52, 58, 60),
- a water-receiving reservoir (6, 18, 66) for receiving water,
- a water-quality measuring device (20) for measuring the water quality of the water whose salt content has been increased, and
- a control unit (10),
wherein the salination unit (14, 24, 36, 48, 52, 58, 60) is designed to add an basic salt to water,
wherein the water-receiving reservoir (6, 18, 66) is arranged downstream of the salination unit (14, 24, 36, 48, 52, 58, 60) for receiving water whose salt content has been increased, and is connected to the water-quality measuring device (20),
wherein the control unit (10) is connected to the water-quality measuring device (20) and to the state measuring device (16) and is designed, for setting a predetermined water quality in the water-comprising reservoir (6, 18, 66), to control the salination unit (14, 24, 36, 48, 52, 58, 60) depending on the operating state of the salination unit (14, 24, 36, 48, 52, 58, 60) and on the measured water quality.

2. The arrangement (2, 22, 34, 42, 46, 50, 54, 56) of claim 1, further comprising conveying equipment (12),
wherein the conveying equipment (12) is arranged downstream of the fuel cell (4) and is designed to lead water from the fuel cell (4) to the salination unit (14, 24, 36, 48, 52, 58, 60).

3. The arrangement (2, 22, 34, 42, 46, 50, 54, 56) of claim 1 or 2,
wherein the water-quality measuring device (20) is a device for measuring the conductivity of water.

4. The arrangement (2, 22, 34, 42, 46, 50, 54, 56) of any one of the preceding claims,
wherein the salination unit (14, 24, 36, 48, 52, 58, 60) comprises at least one salt body enclosed by a housing, wherein the housing comprises an inlet and an outlet so that, due to the flow around or flow through, salt ions from the salt body can be dispensed to water flowing in through the inlet and flowing out through the outlet.

5. The arrangement (2, 22, 34, 42, 46, 50, 54, 56) of any one of the preceding claims,
wherein the salination unit (14, 24, 36, 48, 52, 58, 60) comprises several separate salination devices (26, 28, 38, 40, 62, 64).

6. The arrangement (2, 22, 34, 42, 46, 50, 54, 56) of claim 5,
wherein the separate salination devices (26, 28, 38, 40, 62, 64) are arranged in a parallel connection, and individual valves (30, 32) control the volume flow through the respective salination device (26, 28, 38, 40, 62, 64).

7. The arrangement (2, 22, 34, 42, 46, 50, 54, 56) of claim 5, wherein the separate salination devices (26, 28, 38, 40, 62, 64) are interconnected in a series connection.

8. The arrangement (2, 22, 34, 42, 46, 50, 54, 56) of any one of the preceding claims, further comprising at least one intermediate reservoir (6) arranged upstream of the salination unit (14, 24, 36, 48, 52, 58, 60).

9. The arrangement (2, 22, 34, 42, 46, 50, 54, 56) of any one of claims 1 to 3,
wherein the salination unit (14, 24, 36, 48, 52, 58, 60) comprises a storage tank and a metering device, wherein the metering device is designed to dispense a metered quantity of a saline substance from the storage tank to a reservoir containing water.

10. The arrangement (2, 22, 34, 42, 46, 50, 54, 56) of claim 9, wherein the water-receiving reservoir is a supply reservoir.

11. The arrangement (2, 22, 34, 42, 46, 50, 54, 56) of claim 9, wherein the water-receiving reservoir is an intermediate reservoir that can be connected to a supply reservoir.

12. The arrangement (2, 22, 34, 42, 46, 50, 54, 56) of any one of claims 1 to 9, wherein the storage tank comprises one of a saline solution and water-soluble tablets.

13. The arrangement (2, 22, 34, 42, 46, 50, 54, 56) of any one of the preceding claims,
wherein the water-comprising reservoir (6, 18, 66) comprises a fill level sensor (8) that is connected to the control unit (10), and the control unit (10) is designed, depending on the water quality and the fill quantity in the water-comprising reservoir (6, 18, 66), to determine a quantity of saline substance that is to be placed in the water-comprising reservoir (6, 18, 66) in order to achieve a predetermined quality of drinking water and to control the metering device so that it delivers the determined quantity.

14. A method for treating water generated by a fuel cell (4), with the method comprising the steps of:
- generating water by means of a fuel cell process and subsequent condensation,
- measuring the water quality in a water-receiving reservoir (6, 18, 66),
- salination of the water by adding an basic salt,
- acquiring an operating state of the salination unit (14, 24, 36, 48, 52, 58, 60) by means of a state measuring device (16), and
- setting a desired quality of drinking water by way of a control unit by controlling the salination unit (14, 24, 36, 48, 52, 58, 60) depending on the determined operating state and on the determined water quality.

15. An aircraft comprising an arrangement (2, 22, 34, 42, 46, 50, 54, 56) of any one of claims 1 to 13.

## Patentansprüche

1. Anordnung (2, 22, 34, 42, 46, 50, 54, 56) zum Erzeugen und Aufbereiten von Wasser, aufweisend
- eine Brennstoffzelle (4) mit einem Wassererzeugungssystem,
- eine Aufsalzungseinheit (14, 24, 36, 48, 52, 58, 60) zum Aufsalzen von Wasser mit einer variablen Salzkonzentration,
- eine Zustandsmesseinrichtung (16) zum Erfassen eines Betriebszustands der Aufsalzungseinheit (14, 24, 36, 48, 52, 58, 60),
- einen Wasser aufnehmenden Speicher (6, 18, 66) zum Aufnehmen von Wasser,
- eine Wasserqualitätsmesseinrichtung (20) zum Erfassen der Wasserqualität des aufgesalzenen Wassers und
- eine Regeleinheit (10),
wobei die Aufsalzungseinheit (14, 24, 36, 48, 52, 58, 60) dazu eingerichtet ist, Wasser mit dem basischen Salz zu versetzen,
wobei der Wasser aufnehmende Speicher (6, 18, 66) der Aufsalzungseinheit (14, 24, 36, 48, 52, 58, 60) zum Aufnehmen von aufgesalzenem Wasser nachgeschaltet und mit der Wasserqualitätsmesseinrichtung (20) verbunden ist,
wobei die Regeleinheit (10) mit der Wasserqualitätsmesseinrichtung (20) und der Zustandsmesseinrichtung (16) verbunden ist und dazu eingerichtet ist, zur Einstellung einer vorbestimmten Wasserqualität in dem Wasser aufnehmenden Speicher (6, 18, 66) die Aufsalzungseinheit (14, 24, 36, 48, 52, 58, 60) in Abhängigkeit von dem Betriebszustand der Aufsalzungseinheit (14, 24, 36, 48, 52, 58, 60) und der erfassten Wasserqualität anzusteuern.

2. Anordnung (2, 22, 34, 42, 46, 50, 54, 56) nach Anspruch 1, ferner aufweisend eine Fördereinrichtung (12),
wobei die Fördereinrichtung (12) der Brennstoffzelle (4) nachgeschaltet und dazu eingerichtet ist, Wasser aus der Brennstoffzelle (4) in die Aufsalzungseinheit (14, 24, 36, 48, 52, 58, 60) zu leiten.

3. Anordnung (2, 22, 34, 42, 46, 50, 54, 56) nach Anspruch 1 oder 2,
wobei die Wasserqualitätsmesseinrichtung (20) eine Einrichtung zum Erfassen der Leitfähigkeit von Wasser ist.

4. Anordnung (2, 22, 34, 42, 46, 50, 54, 56) nach einem der vorhergehenden Ansprüche,
wobei die Aufsalzungseinheit (14, 24, 36, 48, 52, 58, 60) mindestens einen von einem Gehäuse umgebenen Salzkörper aufweist, wobei das Gehäuse einen Einlass und einen Auslass aufweist, so dass an durch den Einlass einströmendes und durch den Auslass ausströmendes Wasser Salzionen aus dem Salzkörper abgegeben werden.

5. Anordnung (2, 22, 34, 42, 46, 50, 54, 56) nach einem der vorhergehenden Ansprüche,
wobei die Aufsalzungseinheit (14, 24, 36, 48, 52, 58, 60) mehrere voneinander getrennte Aufsalzungseinrichtungen (26, 28, 38, 40, 62, 64) aufweist.

6. Anordnung (2, 22, 34, 42, 46, 50, 54, 56) nach Anspruch 5,
wobei die getrennten Aufsalzungseinrichtungen (26, 28, 38, 40, 62, 64) in einer Parallelschaltung angeordnet sind und individuelle Ventile (30, 32) den Volumenstrom durch die jeweilige Aufsalzungseinrichtung (26, 28, 38, 40, 62, 64) steuern.

7. Anordnung (2, 22, 34, 42, 46, 50, 54, 56) nach Anspruch 5, wobei die getrennten Aufsalzungseinrichtungen (26, 28, 38, 40, 62, 64) in einer Reihenschaltung miteinander verknüpft sind.

8. Anordnung (2, 22, 34, 42, 46, 50, 54, 56) nach einem der vorhergehenden Ansprüche, ferner aufweisend mindestens einen Zwischenspeicher (6), der der Aufsalzungseinheit (14, 24, 36, 48, 52, 58, 60) vorgeschaltet ist.

9. Anordnung (2, 22, 34, 42, 46, 50, 54, 56) nach einem der Ansprüche 1 bis 3,
wobei die Aufsalzungseinheit (14, 24, 36, 48, 52, 58, 60) einen Vorratsbehälter und eine Dosiereinrichtung aufweist, wobei die Dosiereinrichtung dazu eingerichtet ist, eine dosierte Menge eines salzhaltigen Stoffs aus dem Vorratsbehälter an den Wasser aufweisenden Speicher abzugeben.

10. Anordnung (2, 22, 34, 42, 46, 50, 54, 56) nach Anspruch 9, wobei der Wasser aufnehmende Speicher ein Versorgungsspeicher ist.

11. Anordnung (2, 22, 34, 42, 46, 50, 54, 56) nach Anspruch 9, wobei der Wasser aufnehmende Speicher ein Zwischenspeicher ist, der mit dem Versorgungsspeicher verbindbar ist.

12. Anordnung (2, 22, 34, 42, 46, 50, 54, 56) nach einem der Ansprüche 1 bis 9, wobei der Vorratsbehälter eines von einer Salzlösung und wasserlöslicher Salztabletten aufweist.

13. Anordnung (2, 22, 34, 42, 46, 50, 54, 56) nach einem der vorhergehenden Ansprüche,
wobei der Wasser aufweisende Speicher (6, 18, 66) einen mit der Regeleinheit (10) verbundenen Füllstandssensor (8) aufweist und die Regeleinheit (10) dazu eingerichtet ist, in Abhängigkeit der Wasserqualität und der Füllmenge in dem Wasser aufweisenden Speicher (6, 18, 66) eine Menge an salzhaltigem Stoff zu ermitteln, die zur Erreichung einer vorgegebenen Trinkwasserqualität in den Wasser aufweisenden Speicher (6, 18, 66) einzufüllen ist, und die Dosiereinrichtung zur Abgabe der ermittelten Menge anzusteuern.

14. Verfahren zum Aufbereiten von durch eine Brennstoffzelle (4) generiertem Wasser, aufweisend die Schritte:
- Erzeugen von Wasser mittels eines Brennstoffzellenprozesses und einer nachfolgenden Kondensation,
- Erfassens einer Wasserqualität in einem Wasser aufnehmenden Speicher (6, 18, 66),
- Aufsalzen von Wassers durch Versetzen mit einem basischen Salz,
- Erfassen eines Betriebszustands der Aufsalzungseinheit (14, 24, 36, 48, 52, 58, 60) mit einer Zustandsmesseinrichtung (16) und
- Einstellen einer gewünschten Trinkwasserqualität über eine Regeleinheit durch Ansteuern der Aufsalzungseinheit (14, 24, 36, 48, 52, 58, 60) in Abhängigkeit von der ermittelten Wasserqualität, des ermittelten Betriebszustands und der ermittelten Wasserqualität.

15. Luftfahrzeug mit einer Anordnung (2, 22, 34, 42, 46, 50, 54, 56) nach einem der Ansprüche 1 bis 13.

## Revendications

1. Agencement (2, 22, 34, 42, 46, 50, 54, 56) destiné à produire et à traiter de l'eau, comprenant :
- une pile à combustible (4) dotée d'un système de production d'eau,
- une unité de salinisation (14, 24, 36, 48, 52, 58, 60) destinée à saliniser l'eau avec une concentration variable en sel,
- un sel basique,
- un dispositif de mesure d'état (16) destiné à acquérir un état de fonctionnement de l'unité de salinisation (14, 24, 36, 48, 52, 58, 60),
- un réservoir de réception d'eau (6, 18, 66) destiné à recevoir de l'eau,
- un dispositif de mesure de la qualité de l'eau (20) destiné à mesurer la qualité de l'eau dont la teneur en sel a été augmentée, et
- une unité de commande (10),
dans lequel l'unité de salinisation (14, 24, 36, 48, 52, 58, 60) est conçue pour ajouter un sel basique à l'eau, dans lequel le réservoir de réception d'eau (6, 18, 66) est placé en aval de l'unité de salinisation (14, 24, 36, 48, 52, 58, 60) pour recevoir l'eau dont la teneur en sel a été augmentée, et est relié au dispositif de mesure de la qualité de l'eau (20),
dans lequel l'unité de commande (10) est connectée au dispositif de mesure de la qualité de l'eau (20) et au dispositif de mesure d'état (16) et est conçue pour régler une qualité prédéterminée de l'eau dans le réservoir contenant de l'eau (6, 18, 66), afin de commander l'unité de salinisation (14, 24, 36, 48, 52, 58, 60) en fonction de l'état de fonctionnement de l'unité de salinisation (14, 24, 36, 48, 52, 58, 60) et de la qualité mesurée de l'eau.

2. Agencement (2, 22, 34, 42, 46, 50, 54, 56) selon la revendication 1, comprenant en outre un équipement de transport (12), l'équipement de transport (12) étant placé en aval de la pile à combustible (4) et étant destiné à conduire l'eau de la pile à combustible (4) à l'unité de salinisation (14, 24, 36, 48, 52, 58, 60).

3. Agencement (2, 22, 34, 42, 46, 50, 54, 56) selon la revendication 1 ou 2, dans lequel le dispositif de mesure de la qualité de l'eau (20) est un dispositif destiné à mesurer la conductivité de l'eau.

4. Agencement (2, 22, 34, 42, 46, 50, 54, 56) selon l'une quelconque des revendications précédentes, dans lequel l'unité de salinisation (14, 24, 36, 48, 52, 58, 60) comprend au moins un corps salin renfermé dans un logement, le logement comprenant une entrée et une sortie, de manière que sous l'effet du flux environnant ou du flux traversant, des ions de sel provenant du corps salin puissent être cédés à l'eau s'écoulant vers l'intérieur via l'entrée et s'écoulant vers l'extérieur via la sortie.

5. Agencement (2, 22, 34, 42, 46, 50, 54, 56) selon l'une quelconque des revendications précédentes, dans lequel l'unité de salinisation (14, 24, 36, 48, 52, 58, 60) comprend plusieurs dispositifs de salinisation séparés (26, 28, 38, 40, 62, 64).

6. Agencement (2, 22, 34, 42, 46, 50, 54, 56) selon la revendication 5, dans lequel les dispositifs de salinisation séparés (26, 28, 38, 40, 62, 64) sont disposés selon un montage en parallèle et des soupapes individuelles (30, 32) régulent le débit volumique à travers le dispositif de salinisation respectif (26, 28, 38, 40, 62, 64).

7. Agencement (2, 22, 34, 42, 46, 50, 54, 56) selon la revendication 5, dans lequel les dispositifs de salinisation séparés (26, 28, 38, 40, 62, 64) sont reliés entre eux selon un montage en série.

8. Agencement (2, 22, 34, 42, 46, 50, 54, 56) selon l'une quelconque des revendications précédentes, comprenant en outre au moins un réservoir intermédiaire (6) placé en amont de l'unité de salinisation (14, 24, 36, 48, 52, 58, 60).

9. Agencement (2, 22, 34, 42, 46, 50, 54, 56) selon l'une quelconque des revendications 1 à 3, dans lequel l'unité de salinisation (14, 24, 36, 48, 52, 58, 60) comprend une cuve de stockage et un dispositif de dosage, le dispositif de dosage étant conçu pour délivrer une quantité dosée d'une substance saline de la cuve de stockage à un réservoir contenant de l'eau.

10. Agencement (2, 22, 34, 42, 46, 50, 54, 56) selon la revendication 9, dans lequel le réservoir de réception d'eau est un réservoir d'alimentation.

11. Agencement (2, 22, 34, 42, 46, 50, 54, 56) selon la revendication 9, dans lequel le réservoir de réception d'eau est un réservoir intermédiaire qui peut être relié à un réservoir d'alimentation.

12. Agencement (2, 22, 34, 42, 46, 50, 54, 56) selon l'une quelconque des revendications 1 à 9, dans lequel la cuve de stockage contient soit une solution saline soit des pastilles solubles dans l'eau.

13. Agencement (2, 22, 34, 42, 46, 50, 54, 56) selon l'une quelconque des revendications précédentes, dans lequel le réservoir contenant de l'eau (6, 18, 66) comprend un capteur de niveau de remplissage (8) qui est connecté à l'unité de commande (10), et l'unité de commande (10) est conçue pour déterminer, en fonction de la qualité de l'eau et de la quantité de remplissage dans le réservoir contenant de l'eau (6, 18, 66), une quantité de substance saline qui doit être placée dans le réservoir contenant de l'eau (6, 18, 66) afin d'atteindre une qualité prédéterminée d'eau potable et de commander le dispositif de dosage de manière qu'il délivre la quantité déterminée.

14. Procédé de traitement de l'eau produite par une pile à combustible (4), le procédé comprenant les étapes consistant à :
- produire de l'eau au moyen d'un processus de pile à combustion et d'une condensation ultérieure,
- mesurer la qualité de l'eau dans un réservoir de réception d'eau (6, 18, 66),
- saliniser l'eau en y ajoutant un sel basique,
- acquérir un état de fonctionnement de l'unité de salinisation (14, 24, 36, 48, 52, 58, 60) au moyen d'un dispositif de mesure d'état (16), et
- régler une qualité souhaitée de l'eau potable au moyen d'une unité de commande, en commandant l'unité de salinisation (14, 24, 36, 48, 52, 58, 60) en fonction de l'état de fonctionnement déterminé et de la qualité déterminée de l'eau.

15. Aéronef comprenant un agencement (2, 22, 34, 42, 46, 50, 54, 56) selon l'une quelconque des revendications 1 à 13.
